# EUROPEAN PATENT SPECIFICATION

(11) **EP 3 875 254 B1**
(45) Date of publication and mention of the grant of the patent: **12.06.2024**
(21) Application number: 20160599.5
(22) Date of filing: 03.03.2020
(51) Int. Cl.: B29C 65/18, B29C 65/30

(54) **DEVICE, METHOD AND MACHINE FOR WELDING EDGES MADE OF FLEXIBLE MATERIAL**
VORRICHTUNG, VERFAHREN UND ANLAGE ZUM VERSCHWEISSEN VON RÄNDERN AUS FLEXIBLEM MATERIAL
DISPOSITIF, MÉTHODE ET MACHINE POUR SOUDER DES BORDS EN MATÉRIAU FLEXIBLE

(43) Date of publication of application: 08.09.2021
(73) Proprietor: Volpak, S.A.U., 08130 Santa Perpetua De Mogoda, Barcelona (ES)
(72) Inventor: Quaglia, Silvio, 20142 MILANO (IT)
(74) Representative: Bianciardi, Ezio

(56) References cited:
- WO-A1-2012/064368
- WO-A1-2019/229594

## Description

This invention relates to a device, a method and a machine for welding edges made of flexible material, in particular edges of containers. More specifically, the containers suitable for forming according to this invention are formed from two or sheets or layers of flexible material, specifically heat-sealable material (plastic material, for example) and are preferably, but not necessarily, pouches, sachets, or other wrappers intended to contain articles or doses of product.

These containers are obtained from a pair of sheets or layers that have to be welded along one or more welding lines to form a predetermined internal space in which to enclose articles or a dose of product.

At present, making containers of this kind involves a step of heating and compressing the material at the zones of the edges to be welded in order to thermally weld the edges to form a seal. Heating and compressing are accomplished by specific rigid pressing means which make an even join along the line of the seal to be made.

A known device is described in document WO2012/064368, which describes a thermoforming device comprising forming plates comprising an aesthetic design incorporated therein, wherein each forming plate within the pair comprises a contact surface and the contact surface of each of the forming plates is a three-dimensional mirror image of the contact surface of the other forming plate. The plates are made of stainless steel.

Another known device is described in document WO2019/229594, which shows an apparatus for making containers made of sheet material, comprising a supply station, a welding station configured to receive the film from the supply station, wherein the welding station comprises at least one welding head configured to contact the film and weld at least the folded portion of said film to form a container having a housing compartment. The welding head comprises at least one heater made of electrically conductive material, for example carbon structure (graphite, monolayer or multilayer graphene of fullerene), a structure made of semiconductor material or a structure made of dielectric material.

Disadvantageously, prior art solutions are unsuitable for making the seal in cases where the joining zone varies in thickness: for example, where the outermost zones of the edges to be welded are thicker on account, for example, of folds which double or multiply the thickness.

Under these circumstances, the pressing means are unable to make a proper weld because the excessive thickness of the end zones constitutes an obstacle that prevents application of the compression necessary to weld the adjacent zones, where the thickness is less. The resulting weld is partial or incomplete, unsuitable for the purposes of forming the container.

To partly overcome this obstacle, the prior art teaches welding in two distinct steps: specifically, a step of welding the portions of smaller thickness and a distinct step of welding the portions of greater thickness. Such a solution is problematical, however, because it is not only cumbersome, requiring two working stations in succession, but also time-consuming, having to perform two steps for each item.

This invention has for an aim to provide a device, a method and a machine for welding edges of containers made of flexible material, which are free of the aforementioned disadvantages and which, in particular, can reduce overall machine dimensions and allow achieving high levels of productivity. These and other aims, which are more apparent in the description which follows, are achieved by a device, a method and a machine for welding edges of containers made of flexible material according to this invention. The welding device according to this invention is suitable for welding different types of packs. For example, a non-exhaustive list of such packs may include the following: portions (top ends) of cigarette packets; generic sealing of containers for liquids (brick cartons of multilayer material); packs (wrappers) for confectionery; edges of absorbent articles for sanitary use; pouches for loose or grouped products; outer packages in pouch or bag form for individual items; longitudinal joins for tubes of wrapping material (semi-products) for flow-pack machines.

A welding device according to the invention, configured for welding edges of flexible material, in particular, edges of packs (pouches), comprises two pressing members provided with respective contact portions facing or adapted to face with each other to delimit between them a channel for the insertion of two or more edges to be welded in a superposed configuration, and further comprises a heat generating unit configured to transmit heat to at least one of the contact portions, wherein at least one of the contact portions, specifically the heating portion, is made of a thermal conductive, elastically deformable composite material.

Preferably, both contact portions are heating portions and made of such thermal conductive, elastically deformable composite material. Alternatively, the other contact portion is not a heating portion and may be made of the same material or a different material: for example, a rigid material.

Preferably, the composite material has a thermal conductivity greater than 6 W/(K·m), preferably at least 10 W/(K·m), so as to be able to effectively soften the edges just before welding.

Preferably, the temperature which the material is operatively subjected to during use is less than 200°C and, more preferably, is between 160° and 190°.

Preferably, the composite material has a hardness of between 40 ShoreA and 80 ShoreA and, more preferably, between 60 and 65 ShoreA. Preferably, the composite material is elastically deformable, without giving rise to plastic deformation, up to a pressure of 10 atm.

Advantageously, the composite material comprises a mix of an elastomeric matrix and at least one additive.

The elastomeric matrix is selected from the group comprising: polytetrafluoroethylene (PTFE), in particular with a 25% glass fibre content; fluoroelastomer or fluorosilicone; silicone; the elastomeric matrix being preferably polydimethylsiloxane (PDMS).

The additive is selected from the group comprising: aluminium, graphite, copper, silver, silicon carbide.

Preferably, the additive is present in the form of nanoparticles.

A particularly advantageous selection is given by a PDMS matrix with the addition of silicon carbide as additive.

According to an aspect of the invention, each pressing member also comprises a supporting body of preferably rigid material - for example, metal - and the respective contact portion is defined by an insert fixedly applied on the respective supporting body, specifically in a corresponding recess of the supporting body.

Preferably, the recess is raised relative to a main positioning plane of the supporting body, and, more specifically, formed by machine processing in a rib of the supporting body.

Each contact portion is applied reversibly on the respective supporting body, specifically on the recess, so that it can be quickly replaced when the contact portion is excessively worn (more specifically, when the mechanical properties of the contact portion are degraded beyond a predetermined threshold.

In an embodiment, the pressing members are configured like plates and have intermittent motion to define a succession of individual steps of sealing alternated with steps of moving apart to feed the edges to be welded and to move the welded edges away.

In a different embodiment, the pressing members have rotational motion and are configured like welding rollers, specifically for continuous welding of two or more superposed, continuous edges.

In an embodiment, both of the pressing members are movable towards and away from each other.

In a different embodiment, one of the two pressing members is movable towards and away from the other pressing member, while the other pressing member is fixed and defines a fixed abutment element (anvil).

Furthermore, in an embodiment in which both of the contact portions are made of the aforementioned thermal conductive, elastically deformable composite material, the two contact portions are in relief and extend along respective paths which are identical, hence superposable.

In a different embodiment, in which only one of the two contact portions is made of the aforementioned thermal conductive, elastically deformable composite material, the other contact portion could be planar or smooth: that is, without portions in relief.

In yet another different embodiment, in which only one of the two contact portions is made of the aforementioned thermal conductive, elastically deformable composite material, both of the contact portions are in relief and extend along respective paths which are identical, hence superposable, although they are made of different materials.

Also an object of this invention is a method for welding edges made of flexible material, in particular edges of packs (pouches), implemented preferably by a welding device according to the invention.

The method comprises the steps of disposing in a superposed configuration two or more edges to be welded in a welding station and compressing the superposed edges against each other and simultaneously heating them, wherein the step of compressing and heating is performed by a pair of contact portions, at least one of which, having a heating function, is made of thermal conductive, elastically deformable composite material, and wherein during the step of compressing the superposed edges, the composite material is subjected to exclusively elastic deformation. Preferably, both contact portions are heating portions and made of such thermal conductive, elastically deformable composite material. Alternatively, the other contact portion is not a heating portion and may be made of the same material or a different material: for example, a rigid material.

The step of heating the contact portions is performed by at least one heat generating unit, preferably one for each contact portion, wherein the heat generating unit is mounted on one and the same supporting body as the contact portion and is preferably integrated in the supporting body. More specifically, the heat generating unit is electrical.

Also an object of the invention is a machine for making packs, specifically pouches, from flexible material, comprising feed means for feeding to a welding station two or more superposed edges to be welded, wherein the welding station comprises at least one welding device according to the invention.

The feed means for feeding the edges to be welded may be configured in such a way as to feed pairs of superposed layers. The two layers may be separate - that is to say, in the form of separate sheets or webs - or they may form part of a single web folded about a longitudinal line. Preferably, the feed means comprise at least one roll of flexible material in web form and one or more pairs of guide rollers for guiding the web material through the welding station. Web feed, during welding, is intermittent if discrete action welding plates are used, or continuous if continuous welding rollers are used.

Further features and advantages of this invention are more apparent in the detailed description of preferred but non-exclusive embodiments of a device, a method and a machine for welding edges made of flexible material according to the invention.

The invention is described below with reference to the accompanying drawings which are provided solely for purposes of illustration and in which:
- Figure 1 is a schematic transverse cross section of a welding device according to this invention;
- Figure 2 is a perspective view of a pressing member of the device of Figure 1;
- Figure 3 is a perspective view of the pressing member of Figure 2 from a different angle;
- Figure 3A is an enlarged detail from Figure 3;
- Figure 4 is an exploded view of the pressing member of Figure 2;
- Figure 4A is an enlarged detail from Figure 4;
- Figure 5 is a perspective view of the pressing member of Figure 2 from yet another different angle.

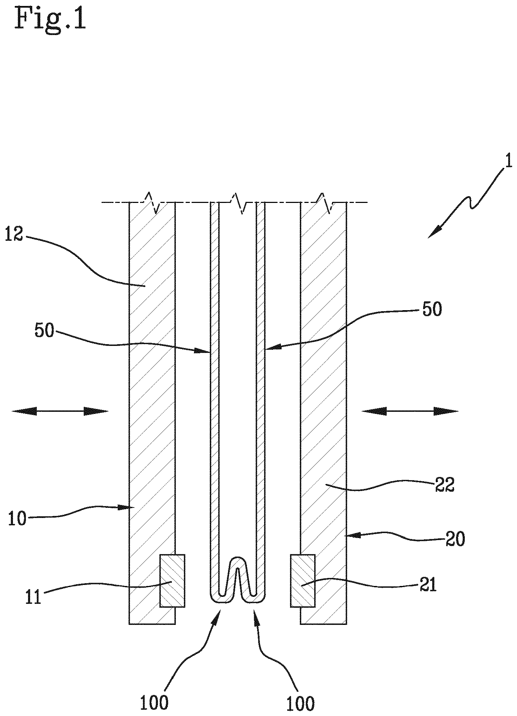

With reference to the accompanying drawings, the numeral 1 denotes in its entirety a schematic representation of a device for welding edges made of flexible material, specifically edges of packs, according to this invention. Preferably (but not necessarily), with reference to Figure 1, the packs may be in the form of pouches.

Although the specification on the flexibility of the material to be welded is not a structural limitation on the welding device, the device is particularly configured for welding superposed edges made of a flexible, heat-sealable material such as, for example, polyethylene or polypropylene.

In its basic structure, shown in Figure 1, the device 1 comprises two pressing members 10, 20, provided with respective contact portions 11, 21, facing or adapted to face with each other to delimit between them a channel for the insertion of two or more edges 100 to be welded in a superposed configuration, each end forming an end part of a respective layer 50. In the specific embodiment illustrated in Figure 1, the two layers 50 form part of a single web or sheet folded about a longitudinal line and wherein, in the central zone intended for joining by welding, the web is folded to define a four-layer configuration (W-shaped configuration). This invention, however, applies equally to variants not illustrated, in which the number of layers in the weld zone could be different and/or in which the two superposed layers could be defined by two separate sheets.

At least one of the two pressing members 10, 20 is provided with a suitably shaped, predetermined relief pattern to act on specific zones of the sheets 50, in particular following the arrangement and two-dimensional shape of the edges 100 so as to compress only specific portions of the sheets 50, having the edges to be welded.

In the context of this invention, by "edges" is meant end portions of the sheets 50 or possibly also inner portions of the sheets 50, intended, for example, to form double-width welds which, when cut, will define pairs of side edges of respective containers/pouches.

Preferably, however, the aforementioned relief portions constitute the contact portions 11, 21 which protrude from a main positioning plane of the respective pressing members 10, 20. For this reason, compressing the pressing members 10, 20 against each other during use is confined only to the regions where the contact portions 11, 21 are disposed, thus making the weld only in the desired zones.

According to a known structure, the two pressing members 10, 20 are moved towards and away from each other by movement means not illustrated in the accompanying drawings. Alternatively, only one of the two pressing members is movable, while the other pressing member defines a fixed abutment element (or anvil).

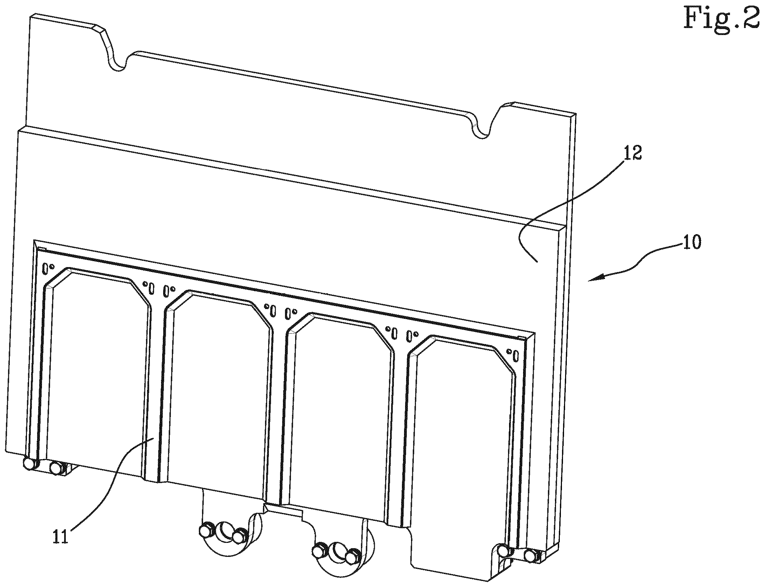

Figures 2-5 show in detail one of the two pressing members 10; the same description, however, also applies to the other pressing member 20, which is preferably identical in shape and substantially mirror symmetric to it.

The pressing member 10 comprises a supporting body 12 (having the shape of a plate, in the embodiment illustrated), made as a single part or by joining two or more parts, from a rigid material, preferably metal, with the contact portion 11 on one side of it. As stated above, the contact portion 11 protrudes from the positioning plane of the supporting plate 12.

In the embodiment illustrated in Figure 2, the contact portion 11 has a succession of parallel walls 11a and a crosspiece 11b joining the parallel walls 11a to define a configuration with a succession of open concavities. This configuration is suitable for forming a plurality of welds along respective U- or C-shaped profiles, integral with each other, made in a single step on a pair of sheets 50, which can then be cut at the inner walls 11 (which are twice as thick as the outer walls 11a) to form a plurality of containers or pouches sealed on three sides - in this specific case, three containers. The invention, however, also applies to different configurations of the contact portion 11, which may define several closed profiles or individual weld profiles at a time.

In these configurations, however, welding occurs in discrete fashion, that is to say through a cycle of closing - pressing - opening, acting on respective pairs of sheets 50 (or portions of a pair of continuous webs or a single continuous web folded along a longitudinal line to form a double thickness). In an alternative embodiment not illustrated, each pressing member 10, 20 could operate continuously on the edges 100. In such a configuration (not illustrated), the supporting body 12 is in the form of a roller and welding occurs continuously by mutual compression between the pressing members 10, 20 while the edges 100 are fed with continuous motion in the channel formed by the contact portions 11, 21. As will become clearer as this description continues, these possible technical solutions do not limit the scope of the invention.

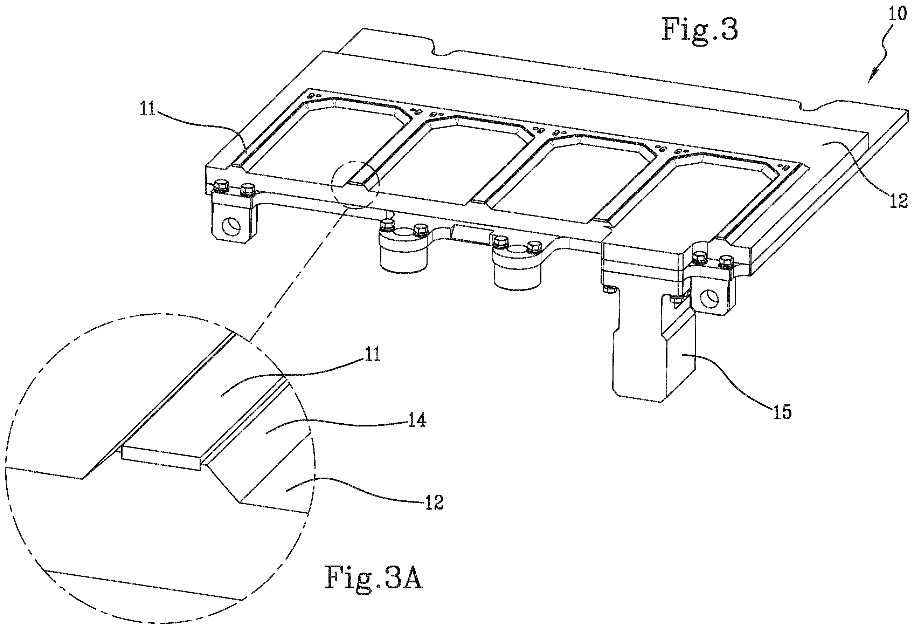

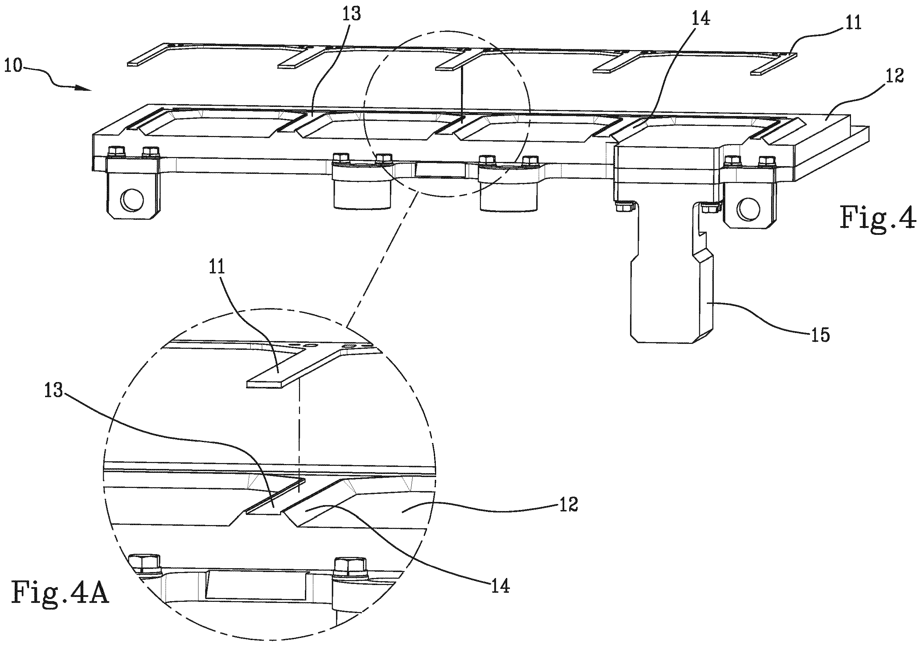

As shown in Figures 3-4 and in the respective enlarged details 3A-4A, the contact portion 11 is made in the form of an insert which is applicable (preferably removably) on the respective supporting body 12. For this purpose, the supporting body 12 has a respective recess 13 shaped to match the contact portion 11 and intended to fixedly receive the contact portion 11. The recess 13 is made, for example, by milling and is raised relative to the main profile of the supporting body 12. More specifically, as shown in Figure 3A or 4A, the recess 13 is raised because it is formed on a rib 14 whose shape follows the shape of the contact portion 11. As shown in Figure 3A or 4A, the rib 14 is tapered in the direction away from the supporting body 12.

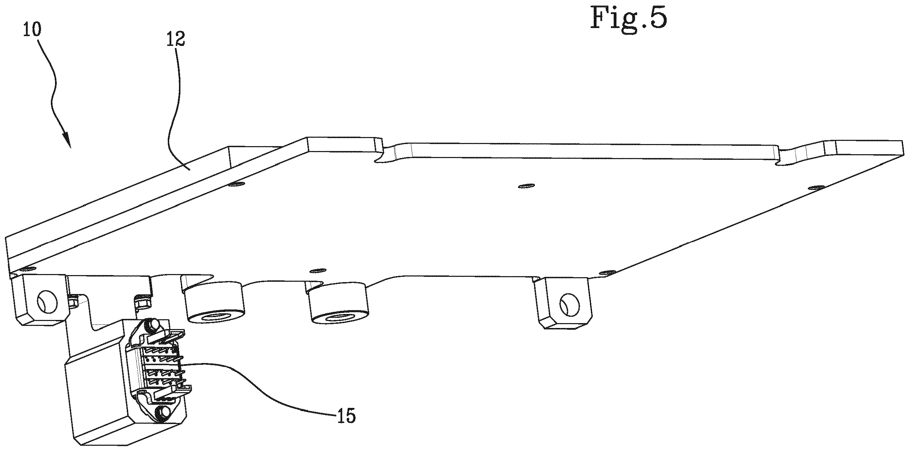

The pressing member 11 internally comprises a heat generating unit not illustrated (preferably integrated in the supporting body 12) and configured to transmit heat to the contact portion 11. The heat generating unit is electrical and for this reason, the pressing member 10 has, preferably on the side opposite the contact portion 11, an electrical connector 15 for connection to the mains electricity (Figure 5).

Advantageously, the contact portion 11 is made of a thermal conductive, elastically deformable (compliant) material to allow elastic deformation of the contact portions during normal operation of the welding device.

The thermal conductivity properties of the material have the function of efficiently transmitting the heat from the heat generating unit to the edges 100 being welded through the contact portions 11.

Preferably, the material has a thermal conductivity greater than 6 W/(K·m), preferably at least 10 W/(K·m).

Further, the elastic compliance properties of the material have the function of adapting the shape of the contact portion to the respective edge 100 to be welded so as to optimize the forming of the final welded edge. In this regard, by "elastically deformable" is meant a material whose deformation is exclusively elastic in the range of operating parameters (pressure, temperature) of the device.

Preferably, the material has a hardness of between 40 ShoreA and 80 ShoreA and, more preferably, between 60 and 65 ShoreA.

Also, the material is elastically deformable, without giving rise to plastic deformation, up to a pressure of 10 atm.

In this context, the material is subjected to maximum operating temperatures below 200°C, preferably between 160° and 190°.

In a preferred embodiment, the material is a composite material, in particular one comprising a mix of an elastomeric matrix and at least one additive. The elastomeric matrix is selected from the group comprising:
- polytetrafluoroethylene (PTFE), in particular with a 25% glass fibre content;
- fluoroelastomer or fluorosilicone;
- more in general, silicone (aliphatic or aromatic) with or without additional charge.

In a preferred embodiment, the elastomeric matrix is a silicone and, more preferably, polydimethylsiloxane (PDMS).

The additive is selected from the group comprising aluminium, graphite, copper, silver, silicon carbide.

Preferably, the additive selected is silicon carbide. In effect, it has been found that silicon carbide, and even more so if combined with a PDMS matrix, can offer much higher thermal conductivity values than other additives, even if present in a smaller quantity.

Preferably, also, the additive is present in the form of nanoparticles. This optimizes the properties of the material while reducing the quantity of additive used.

The invention achieves the preset aims, overcoming the disadvantages of the prior art.

In effect, the device according to the invention allows making a complete weld in a single step, even on edges having discontinuity of thickness: for example, a local variation from twice the thickness to four times the thickness.

In effect, using the specific material selected allows obtaining local deformation of the heating contact portions to adapt to the different thicknesses and simultaneously weld the zones of greater thickness as well as the zones of lesser thickness, without creating unwelded gaps.

The result is a machine whose architecture is simplified and characterized by compact dimensions.

## Claims

1. A device for welding edges (100) of flexible material, in particular, edges of packs, comprising two pressing members (10, 20) provided with respective contact portions (11, 21) facing or adapted to face with each other to delimit between them a channel for the insertion of two or more edges (100) to be welded in a superposed configuration, and further comprising a heat generating unit configured to transmit heat to at least a first of the contact portions (11, 21), **characterized in that** at least the first contact portion (11, 21), preferably both the contact portions (11, 21), is made of a thermal conductive, elastically deformable composite material.

2. The device according to claim 1, wherein the material has a thermal conductivity greater than 6 W/(K·m), preferably at least 10 W/(K·m).

3. The device according to claim 1 or 2, wherein the composite material has a hardness of between 40 ShoreA and 80 ShoreA and, more preferably, between 60 and 65 ShoreA.

4. The device according to any one of the preceding claims, wherein the composite material is elastically deformable, without giving rise to plastic deformation, up to a pressure of 10 atm.

5. The device according to any one of the preceding claims, wherein the composite material comprises a mix of an elastomeric matrix and at least one additive.

6. The device according to claim 5, wherein the elastomeric matrix is selected from the group comprising: polytetrafluoroethylene (PTFE), in particular with a 25% glass fibre content; fluoroelastomer or fluorosilicone; silicone; the elastomeric matrix being preferably polydimethylsiloxane (PDMS).

7. The device according to claim 5 or 6, wherein the additive is selected from the group comprising: aluminium, graphite, copper, silver, silicon carbide.

8. The device according to any one of the preceding claims, wherein each pressing member (10, 20) also comprises a supporting body (12, 22) of preferably rigid material - for example, metal - and wherein the contact portion (11, 21) is defined by an insert fixedly applied on the respective supporting body, specifically in a corresponding recess (13) of the supporting body (12, 22).

9. The device according to claim 8, wherein the contact portion (11, 21) is applied reversibly on the respective supporting body (12, 22), specifically in the recess (13).

10. The device according to any one of the preceding claims, wherein the pressing members (10, 20) have intermittent motion to define a succession of individual steps of sealing alternated with steps of moving apart to feed the edges (100) to be welded and to move the welded edges (100) away.

11. The device according to any one of claims 1 to 9, wherein the pressing members (10, 20) have rotational motion and are configured like welding rollers, specifically for continuous welding of two or more superposed, continuous edges.

12. A method for welding edges (100) made of flexible material, specifically edges of packs, comprising the following steps:
- disposing in a superposed configuration two or more edges (100) to be welded in a welding station;
- compressing the superposed edges (100) against each other and simultaneously heating them,
wherein the step of compressing and heating is performed by a pair of contact portions, (11, 21), carried by respective pressing members (10, 20), in particular using a welding device (1) according to any one of the preceding claims, wherein at least a first of the contact portions (11, 21), configured to heat the edges, is made of a thermal conductive, elastically deformable composite material, and wherein during the step of compressing the superposed edges (100), the composite material is subjected to exclusively elastic deformation.

13. The method of claim 12, wherein the edges (100) to be welded are edges of pouches.

14. A machine for making packs, specifically pouches, from flexible material, comprising feed means for feeding to a welding station two or more superposed edges (100) to be welded, wherein the welding station comprises at least one welding device (1) according to one or more of claims 1 to 11.

## Patentansprüche

1. Vorrichtung zum Verschweißen von Rändern (100) aus flexiblem Material, insbesondere Ränder von Packungen, umfassend zwei Presselemente (10, 20), die mit jeweiligen Kontaktabschnitten (11, 21) versehen sind, die einander zugewandt sind oder so angepasst sind, dass sie einander zugewandt sind, um zwischen ihnen einen Kanal zum Einführen von zwei oder mehr zu verschweißenden Rändern (100) in einer übereinanderliegenden Auslegung zu begrenzen, und ferner umfassend eine Wärmeerzeugungseinheit, die dazu ausgelegt ist, Wärme auf mindestens einen ersten der Kontaktabschnitte (11, 21) zu übertragen, **dadurch gekennzeichnet, dass** mindestens der erste Kontaktabschnitt (11, 21), vorzugsweise beide Kontaktabschnitte (11, 21), aus einem wärmeleitenden, elastisch verformbaren Verbundmaterial hergestellt sind.

2. Vorrichtung nach Anspruch 1, wobei das Material eine Wärmeleitfähigkeit größer als 6 W/(K-m), vorzugsweise mindestens 10 W/(K·m) aufweist.

3. Vorrichtung nach Anspruch 1 oder 2, wobei das Verbundmaterial eine Härte zwischen 40 ShoreA und 80 ShoreA und bevorzugter zwischen 60 und 65 ShoreA aufweist.

4. Vorrichtung nach einem der vorhergehenden Ansprüche, wobei das Verbundmaterial bis zu einem Druck von 10 atm elastisch verformbar ist, ohne dass es zu einer plastischen Verformung kommt.

5. Vorrichtung nach einem der vorhergehenden Ansprüche, wobei das Verbundmaterial eine Mischung aus einer Elastomermatrix und mindestens einem Additiv umfasst.

6. Vorrichtung nach Anspruch 5, wobei die Elastomermatrix ausgewählt ist aus der Gruppe umfassend: Polytetrafluorethylen (PTFE), insbesondere mit einem Glasfaseranteil von 25 %; Fluorelastomer oder Fluorsilikon; Silikon; wobei die Elastomermatrix bevorzugt Polydimethylsiloxan (PDMS) ist.

7. Vorrichtung nach Anspruch 5 oder 6, wobei das Additiv ausgewählt ist aus der Gruppe umfassend: Aluminium, Graphit, Kupfer, Silber, Siliziumkarbid.

8. Vorrichtung nach einem der vorhergehenden Ansprüche, wobei ein jedes Presselement (10, 20) ferner einen Stützkörper (12, 22) aus vorzugsweise starrem Material - beispielsweise Metall - umfasst und wobei der Kontaktabschnitt (11, 21) durch einen am jeweiligen Stützkörper fest angebrachte Einsatz definiert ist, und zwar in einer entsprechenden Ausnehmung (13) des Stützkörpers (12, 22).

9. Vorrichtung nach Anspruch 8, wobei der Kontaktabschnitt (11, 21) reversibel an dem jeweiligen Stützkörper (12, 22) angebracht ist, und zwar in der Ausnehmung (13).

10. Vorrichtung nach einem der vorhergehenden Ansprüche, wobei die Presselemente (10, 20) eine intermittierende Bewegung aufweisen, um eine Abfolge einzelner Schritte des Abdichtens abwechselnd mit Schritten des Auseinanderbewegens zu definieren, um die zu verschweißenden Ränder (100) zuzuführen und die verschweißten Ränder (100) wegzubewegen.

11. Vorrichtung nach einem der Ansprüche 1 bis 9, wobei die Presselemente (10, 20) eine Drehbewegung aufweisen und wie Schweißrollen ausgebildet sind, und zwar zum kontinuierlichen Verschweißen von zwei oder mehr übereinanderliegenden, durchgehenden Rändern.

12. Verfahren zum Verschweißen von Rändern (100) aus flexiblem Material, insbesondere Ränder von Packungen, umfassend die folgenden Schritte:
- Anordnen von zwei oder mehr zu verschweißenden Ränder (100) in einer Schweißstation in einer übereinanderliegenden Auslegung;
- Zusammendrücken der übereinanderliegenden Ränder (100) gegeneinander und gleichzeitiges Erwärmen derselben, wobei der Schritt zum Zusammendrücken und Erwärmen durch ein Paar von Kontaktabschnitten (11, 21) durchgeführt wird, die von jeweiligen Presselementen (10, 20) getragen werden, insbesondere unter Verwendung einer Schweißvorrichtung (1) nach einem der vorhergehenden Ansprüche, wobei mindestens ein erster der Kontaktabschnitte (11, 21), der zum Erwärmen der Ränder ausgelegt ist, aus einem wärmeleitenden, elastisch verformbaren Verbundmaterial hergestellt ist, und wobei während des Schritts zum Zusammendrücken der übereinanderliegenden Ränder (100) das Verbundmaterial einer ausschließlich elastischen Verformung unterzogen wird.

13. Verfahren nach Anspruch 12, wobei es sich bei den zu verschweißenden Rändern (100) um Ränder von Beuteln handelt.

14. Maschine zum Herstellen von Packungen, insbesondere Beuteln, aus flexiblem Material, umfassend Zuführmittel zum Zuführen von zwei oder mehr übereinanderliegenden zu verschweißenden Ränder (100) zu einer Schweißstation, wobei die Schweißstation mindestens eine Schweißvorrichtung (1) nach einem oder mehreren der Ansprüche 1 bis 11 umfasst.

## Revendications

1. Dispositif pour souder des bords (100) en matériau flexible, en particulier des bords d'emballages, comprenant deux organes de pressage (10, 20) pourvus de parties de contact (11, 21) respectives se faisant face ou adaptées pour se faire face pour délimiter entre celles-ci un canal pour l'insertion de deux ou plusieurs bords (100) à souder dans une configuration superposée, et comprenant de plus une unité de génération de chaleur configurée pour transmettre de la chaleur à au moins une première des parties de contact (11, 21), **caractérisé en ce qu'**au moins la première partie de contact (11, 21), de préférence les deux parties de contact (11, 21), est constituée d'un matériau composite thermo-conductif et élastiquement déformable.

2. Dispositif selon la revendication 1, dans lequel le matériau a une conductivité thermique supérieure à 6 W/(K·m), de préférence au moins 10 W/(K·m).

3. Dispositif selon la revendication 1 ou 2, dans lequel le matériau composite a une dureté comprise entre 40 et 80 Shore A et, de préférence, entre 60 et 65 Shore A.

4. Dispositif selon l'une quelconque des revendications précédentes, dans lequel le matériau composite est élastiquement déformable, sans donner lieu à une déformation plastique, jusqu'à une pression de 10 atm.

5. Dispositif selon l'une quelconque des revendications précédentes, dans lequel le matériau composite comprend un mélange d'une matrice en élastomère et d'au moins un additif.

6. Dispositif selon la revendication 5, dans lequel la matrice en élastomère est choisie dans le groupe comprenant : le polytétrafluoroéthylène (PTFE), en particulier avec une teneur en fibres de verre de 25 % ; le fluoroélastomère ou fluorosilicone ; le silicone ; la matrice en élastomère étant de préférence du polydiméthylsiloxane (PDMS).

7. Dispositif selon la revendication 5 ou 6, dans lequel l'additif est choisi dans le groupe comprenant : l'aluminium, le graphite, le cuivre, l'argent, le carbure de silicium.

8. Dispositif selon l'une quelconque des revendications précédentes, dans lequel chaque organe de pression (10, 20) comprend également un corps de support (12, 22) de préférence en matériau rigide - par exemple, en métal - et dans lequel la partie de contact (11, 21) est définie par un insert appliqué de manière fixe sur le corps de support respectif, en particulier dans un renfoncement correspondant (13) du corps de support (12, 22).

9. Dispositif selon la revendication 8, dans lequel la partie de contact (11, 21) est appliquée de manière réversible sur le corps de support respectif (12, 22), en particulier dans le renfoncement (13).

10. Dispositif selon l'une quelconque des revendications précédentes, dans lequel les organes de pressage (10, 20) ont un mouvement intermittent pour définir une succession d'étapes individuelles de scellement alternées avec des étapes d'éloignement pour alimenter les bords (100) à souder et pour éloigner les bords soudés (100).

11. Dispositif selon l'une quelconque des revendications 1 à 9, dans lequel les organes de pression (10, 20) ont un mouvement de rotation et sont configurés comme des rouleaux de soudure, en particulier pour le soudage continu de deux ou plusieurs bords continus superposés.

12. Méthode pour souder des bords (100) en matériau flexible, en particulier des bords d'emballages, comprenant les étapes suivantes :
- disposer dans une configuration superposée deux ou plusieurs bords (100) à souder dans un poste de soudage ;
- comprimer les bords (100) superposés l'un contre l'autre et les chauffer simultanément,
dans laquelle l'étape de compression et de chauffage est réalisée par une paire de parties de contact (11, 21) portées par des organes de pressage (10, 20) respectifs, en particulier à l'aide d'un dispositif de soudage (1) selon l'une quelconque des revendications précédentes, dans laquelle au moins une première partie des parties de contact (11, 21), configurée pour chauffer les bords, est constituée d'un matériau composite thermo-conductif et élastiquement déformable, et dans laquelle, lors de l'étape de compression des bords superposés (100), le matériau composite est soumis à une déformation exclusivement élastique.

13. Méthode selon la revendication 12, dans laquelle les bords (100) à souder sont des bords de sachets.

14. Machine pour fabriquer des emballages, notamment des sachets, à partir de matériau flexible, comprenant des moyens d'alimentation pour alimenter à un poste de soudage deux ou plusieurs bords (100) superposés à souder, dans laquelle le poste de soudage comprend au moins un dispositif de soudage (1) selon une ou plusieurs des revendications 1 à 11.
